# EUROPÄISCHE PATENTSCHRIFT

(11) **EP 3 783 529 B1**
(45) Veröffentlichungstag und Bekanntmachung des Hinweises auf die Patenterteilung: **25.11.2026**
(21) Anmeldenummer: 20179953.3
(22) Anmeldetag: 15.06.2020
(51) Int. Cl.: G06V 20/58, G06V 20/68

(54) **SICHERHEITSSYSTEM UND VERFAHREN ZUM BETREIBEN EINER MOBILEN LANDWIRTSCHAFTLICHEN ARBEITSMASCHINE**
SAFETY SYSTEM AND METHOD FOR OPERATING A MOBILE AGRICULTURAL WORKING MACHINE
SYSTÈME DE SÉCURITÉ ET PROCÉDÉ DE FONCTIONNEMENT D'UNE MACHINE DE TRAVAIL AGRICOLE MOBILE

(30) Priorität: 23.08.2019 DE 102019122755
(43) Veröffentlichungstag der Anmeldung: 24.02.2021
(73) Patentinhaber: HORSCH LEEB Application Systems SE & Co. KG, 94405 Landau a.d. Isar (DE)
(72) Erfinder: LEEB, Theodor, 94405 Landau an der Isar (DE)
(74) Vertreter: v. Bezold & Partner Patentanwälte - PartG mbB

(56) Entgegenhaltungen:
- EP-A1- 1 529 428
- EP-A1- 2 368 419
- EP-B1- 1 529 428
- WO-A1-2015/077452
- DE-A1- 102016 209 437

## Beschreibung

Die Erfindung betrifft ein Sicherheitssystem für eine mobile landwirtschaftliche Arbeitsmaschine, eine mit einem Sicherheitssystem ausgestattete landwirtschaftliche Arbeitsmaschine und ein Verfahren zum Betreiben einer mobilen landwirtschaftlichen Arbeitsmaschine.

In der Landtechnik halten zunehmend teilautonome und vollautonome Fahrzeuge Einzug. Ein derartiges Fahrzeug wurde beispielsweise in der Deutschen Patentanmeldung Nr. 10 2018 108 024 angemeldet.

Ein sicherheitstechnisch schwer umzusetzender Aspekt betrifft die Umsetzung einer "virtuellen Grenze", innerhalb derer sich die landwirtschaftliche Arbeitsmaschine bewegen darf. D. h., es muss sichergestellt werden, dass die Arbeitsmaschine die jeweilige landwirtschaftliche Fläche nicht unkontrolliert verlässt. Hierbei gibt es einen Unterschied zu beispielsweise aus dem Automobilbereich bekannten Techniken. PKWs und LKWs werden jeweils entlang von Straßen geführt, deren Grenzen beispielsweise durch Leitpfosten abgesteckt sind, welche mittels Sensorik gut erkennbar bzw. erfassbar sind. Dies ist bei großen landwirtschaftlichen Flächen, welche zudem verschiedenste Grenzen (z. B. angrenzend an Straße oder angrenzend an Feldweg oder angrenzend an andere Kultur oder dergl.) und Grenzkonturen (z. B. kurvenreich, gerade oder dergl.) aufweisen können, nicht oder nur bedingt der Fall. Grundlage für eine sichere Navigation kann eine zuverlässige Positionsbestimmungsvorrichtung bilden.

Die aus dem Stand der Technik bekannten Positionsbestimmungsvorrichtungen können mitunter Abweichungen zur tatsächlichen Position von einigen Zentimeter bis hin zu einem Meter oder mehr haben. Dies könnte zur Folge haben, dass die Arbeitsmaschine beispielsweise spurversetzt um die jeweilige Abweichung entlang einer vorab definierten Fahrspur geführt wird. Zudem kann es vorkommen, dass die Verbindung zwischen einer Steuereinheit und einer Positionsbestimmungsvorrichtung unterbrochen wird, wodurch wiederum sicherheitskritische Zustände eintreten können. Dies könnte insbesondere kritisch sein, wenn die Arbeitsmaschine genau neben einer Straße bewegt werden muss.

Die EP 1 529 428 A1 offenbart ein Verfahren zum selbsttätigen Lenken einer landwirtschaftlichen Maschine auf einem Feld entlang einer zu bearbeitenden Fläche. Ein vor der Maschine liegender Bereich des Felds einschließlich der zu bearbeitenden Fläche wird mit einer abbildenden Kamera aufgenommen. Eine Pixeldatei wird aus einem Bildsignal der Kamera erzeugt. Eine Texturinformation wird bezüglich der Textur der Umgebung der Pixel der Pixeldatei erzeugt. Pixel der Pixeldatei werden unter Berücksichtigung der Texturinformation klassifiziert, um eine binäre Information zu erzeugen, ob das jeweilige Pixel der zu bearbeitenden Fläche zuzuordnen ist oder nicht. Ein Lenksignal wird basierend auf den Ergebnissen der Klassifikation erzeugt. Lenkmitteln der Erntemaschine werden gemäß dem Lenksignal verstellt, so dass die Maschine selbsttätig entlang der zu bearbeitenden Fläche gelenkt wird.

Die DE 10 2016 209437 A1 offenbart ein selbsttätiges Lenksystem zur Führung eines landwirtschaftlichen Fahrzeugs über ein Feld, auf dem bei einem vorhergehenden Arbeitsvorgang eine Fahrspur hinterlassen wurde, umfassend eine auf die Fahrspur blickende Kamera, ein Bildverarbeitungssystem zur Verarbeitung von Bildsignalen der Kamera und eine Lenksteuerung, der ein vom Bildverarbeitungssystem erzeugtes Positionssignal hinsichtlich einer detektierten Position der Fahrspur zuführbar ist. Das Bildverarbeitungssystem ist programmiert, das Bildsignal der Kamera in ein binäres Bild zu überführen und die Fahrspur anhand einer auf das binäre Bild angewandten, morphologischen Operation unter Verwendung eines die Fahrspur repräsentierenden Strukturelements zu erkennen.

EP 2 368 419 A1 offenbart ein landwirtschaftliches Fahrzeug umfassend ein Lenksystem, das Lenksignale bereitstellt, wobei das Lenksystem eine Abbildungsvorrichtung zum Abbilden der Umgebung des Fahrzeugs und eine Bildverarbeitungsvorrichtung umfasst. Das Lenksystem arbeitet, um mittels der Abbildungsvorrichtung ein Bild des Feldes bereitzustellen, das Bild zu analysieren usw., um ein Lenksignal bereitzustellen.

WO 2015/077452 A1 offenbart eine autonome Fahrzeugplattform und ein System zum selektiven Ausführen einer saisonalen Managementaufgabe in einem landwirtschaftlichen Feld. Die autonome Fahrzeugplattform weist eine Fahrzeugbasis mit einer Breite, die so dimensioniert ist, dass sie durch den Raum zwischen zwei Reihen von gepflanzten Feldfrüchten eingesetzt werden kann. Die Fahrzeugbasis weist eine saisonale Aufgabenmanagementstruktur auf, die konfiguriert ist, um verschiedene Aufgaben auszuführen, einschließlich des selektiven Ausbringens von Dünger, des Kartierens von Wachstumszonen und des Säens von Deckfrüchten innerhalb eines landwirtschaftlichen Feldes.

Der Erfindung liegt die Aufgabe zu Grunde, eine alternative und/oder verbesserte Sicherheitstechnik zum Betreiben einer mobilen landwirtschaftlichen Arbeitsmaschine zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

In einem Aspekt betrifft die vorliegende Offenbarung ein Sicherheitssystem für eine mobile landwirtschaftliche Arbeitsmaschine (z. B. Feldspritze, Düngerstreuer, Sämaschine, Zugmaschine, Traktor, Erntemaschine, Mähdrescher oder Feldhäcksler). Das Sicherheitssystem weist eine Sensorvorrichtung auf, die dazu ausgebildet ist, eine Umgebung, vorzugsweise einen Bodenbereichs (umfassend Boden, Pflanzenbestand usw.) der Umgebung, zu erfassen (z. B. als Umgebungsinformationen). Das Sicherheitssystem weist eine Auswerteeinrichtung auf, die dazu ausgebildet ist, die erfasste Umgebung unter Berücksichtigung (z. B. mittels Vergleich) von vorgegebenen Umgebungsinformationen, die einer zum Befahren zugelassenen landwirtschaftlichen Nutzfläche (z. B. einer Ausdehnung einer zum Befahren zugelassenen landwirtschaftlichen Nutzfläche), nämlich Ackerfläche, zugeordnet sind, auszuwerten. Die Auswerteeinrichtung ist ferner dazu ausgebildet, basierend auf der Auswertung die zum Befahren zugelassene landwirtschaftliche Nutzfläche in der erfassten Umgebung zu erkennen, und einen zum Befahren nicht zugelassenen (Umgebungs-) Bereich, vorzugsweise außerhalb der zum Befahren zugelassenen landwirtschaftlichen Nutzfläche, in der erfassten Umgebung zu erkennen.

Das Sicherheitssystem beruht auf der Erkenntnis, dass verschiedene Ackerflächen mit gleichen oder unterschiedlichen Pflanzenbeständen und die Umgebung der Ackerflächen jeweils unterschiedliche Regelmäßigkeiten, Unregelmäßigkeiten und Farben bzw. Farbspektren aufweisen. Beispielsweise sind die mittels Sensorik erfassbaren Wellenlängen von verschiedenen Ackerflächen, Grenzen, Wegen, Straßen etc. jeweils unterschiedlich. Das Sicherheitssystem kann sich diese Erkenntnis auf sehr einfache und dennoch wirkungsvolle Weise zu Nutze machen. Die Prüfung dahingehend, ob ein Bereich zum Befahren zugelassen ist oder nicht, erfolgt beispielsweise anhand der jeweils erfassten Farbinformation. So kann beispielsweise sehr einfach zwischen Ackerflächen und deren Umgebung (z. B. Grenzen, Wege, Straßen, Wiesen usw.) unterschieden werden. Diese Auswertung kann dazu genutzt werden, um zu prüfen, ob sich die Arbeitsmaschine innerhalb des vorgesehenen Arbeitsbereichs bewegt oder nicht. Wird beispielsweise der zum Befahren zugelassene Bereich verlassen, kann zudem vorgesehen sein, dass die Arbeitsmaschine stillgesetzt wird, beispielsweise einen Not-Halt durchführt und/oder in einen sicherheitsunkritischen Zustand überführt wird und beispielsweise erst wieder nach Freigabe durch eine Bedienperson in Bewegung gesetzt werden kann. Vorzugsweise kann die Auswerteeinheit die erfasste Umgebung nur in eine zum Befahren zugelassene landwirtschaftliche Nutzfläche und einen zum Befahren nicht zugelassenen Bereich unterteilen.

Beispielsweise kann die erfasste Umgebung beim Auswerten mit den vorgegebenen Umgebungsinformationen verglichen werden.

In einer Ausführungsform ist die Auswerteeinrichtung ferner dazu ausgebildet, in der erfassten Umgebung eine Fläche zu finden, deren Umgebungsinformationen (z. B Strukturinformationen und/oder Farbinformationen) mit den vorgegebenen Umgebungsinformationen (z. B Strukturinformationen und/oder Farbinformationen) übereinstimmen, sodass eine Ausdehnung (z. B. Längenausdehnung und/oder Breitenausdehnung) dieser Fläche als eine Ausdehnung der zum Befahren zugelassenen landwirtschaftlichen Nutzfläche erkannt wird. Alternativ oder zusätzlich ist die Auswerteeinrichtung ferner dazu ausgebildet, in der erfassten Umgebung eine Fläche zu finden, deren Umgebungsinformationen (z. B Strukturinformationen und/oder Farbinformationen) nicht mit den vorgegebenen Umgebungsinformationen (z. B Strukturinformationen und/oder Farbinformationen) übereinstimmen, sodass eine Ausdehnung (z. B. Längenausdehnung und/oder Breitenausdehnung) dieser Fläche als eine Ausdehnung des zum Befahren nicht zugelassenen Bereichs erkannt wird.

In einem Ausführungsbeispiel weisen die vorgegebenen Umgebungsinformationen vorgegebene Farbinformationen auf, die der zum Befahren zugelassenen landwirtschaftlichen Nutzfläche zugeordnet sind. Vorzugsweise können die vorgegebenen Farbinformationen einen Grenzwert (z. B. Farbgrenzwert, Wellenlängengrenzwert) und/oder einen Abschnitt eines Farbspektrums aufweisen, und/oder die vorgegebenen Farbinformationen können sich auf eine Färbung der zum Befahren zugelassenen landwirtschaftlichen Nutzfläche beziehen. Beispielsweise können die Farbinformationen von einer Bedienperson vorgegeben werden, sobald die Bedienperson die Ackerfläche mit der Arbeitsmaschine erreicht. So können aktuelle Farbinformationen vorgegeben werden, die die Auswertung besonders genau machen. Der Bediener kann beispielsweise eine Farbe der bewachsenen oder unbewachsenen Ackerfläche vorgeben (z. B. Grüntöne, Gelbtöne und/oder Brauntöne für einen entsprechenden Pflanzenbewuchs der Ackerfläche und/oder Brauntöne für eine entsprechende Bodenfarbe der Ackerfläche).

In einer Ausführungsform weisen die vorgegebenen Farbinformationen einen unteren Grenzwert (z. B. Farbgrenzwert, Wellenlängengrenzwert) eines Farbspektrums auf, bei dessen Unterschreiten ein zum Befahren nicht zugelassener Bereich der Umgebung erkannt wird und/oder bei dessen Überschreiten die zum Befahren zugelassene landwirtschaftliche Nutzfläche erkannt wird.

In einer weiteren Ausführungsform weisen die vorgegebenen Farbinformationen einen Abschnitt (z. B. Wellenlängenabschnitt, mehrere Farbtöne) eines Farbspektrums auf, in dem die zum Befahren zugelassene landwirtschaftliche Nutzfläche erkannt wird und/oder außerhalb dessen ein zum Befahren nicht zugelassener Bereich der Umgebung erkannt wird.

In einer weiteren Ausführungsform weisen die vorgegebenen Farbinformationen einen oberen Grenzwert (z. B. Farbgrenzwert, Wellenlängengrenzwert) eines Farbspektrums auf, bei dessen Überschreiten ein zum Befahren nicht zugelassener Bereich der Umgebung erkannt wird und/oder bei dessen Unterschreiten die zum Befahren zugelassene landwirtschaftliche Nutzfläche erkannt wird.

In einem Ausführungsbeispiel weisen die vorgegebenen Umgebungsinformationen vorgegebene Strukturinformationen auf, die der zum Befahren zugelassenen landwirtschaftlichen Nutzfläche zugeordnet sind. Vorzugsweise können die vorgegebenen Strukturinformationen sich auf ein Muster (z. B. regelmäßige Struktur) und/oder eine unregelmäßige Struktur der zum Befahren zugelassenen landwirtschaftlichen Nutzfläche beziehen.

In einem weiteren Ausführungsbeispiel beziehen sich die vorgegebenen Strukturinformationen auf eine Anordnung, insbesondere einen Reihenabstand, von Reihen einer Reihenkultur der zum Befahren zugelassenen landwirtschaftlichen Nutzfläche. Alternativ oder zusätzlich beziehen sich die vorgegebenen Strukturinformationen auf eine Anordnung von Dämmen der zum Befahren zugelassenen landwirtschaftlichen Nutzfläche und/oder auf ein Relief (z. B. Bodenrelief) der zum Befahren zugelassenen landwirtschaftlichen Nutzfläche.

Das Sicherheitssystem weist ferner eine Benutzerschnittstelle für die mobile landwirtschaftliche Arbeitsmaschine (z. B. zum Anordnen in einer Fahrerkabine der Arbeitsmaschine) auf. Mittels der Benutzerschnittstelle ist vorgebbar, dass von der Sensorvorrichtung erfasste Umgebungsinformationen, nämlich Strukturinformationen und/oder Farbinformationen, als die vorgegebenen Umgebungsinformationen abgespeichert werden. So werden bei Ankunft der Arbeitsmaschine auf der Ackerfläche zunächst das Farbspektrum oder die Struktur der Ackerfläche erfasst und so die zum Befahren zugelassene landwirtschaftliche Nutzfläche festgelegt. Es ist auch möglich, dass die vorgegebenen Umgebungsinformationen mittels der Benutzerschnittstelle eingebbar sind.

In einer weiteren Ausführungsvariante weist die Sensorvorrichtung mindestens eines auf von einer Kameravorrichtung, vorzugsweise Farbkameravorrichtung, einem Lichtsensor, einem Farbsensor, einem CMOS-Sensor, einem CCD-Sensor, einem Spektrometer, einer Radarvorrichtung, vorzugsweise Bodenradarvorrichtung, und/oder einer Laserscannervorrichtung.

In einem Ausführungsbeispiel ist die Auswerteeinrichtung ferner dazu ausgebildet, die erfasste Umgebung zum Erkennen einer Person, eines Gegenstands und/oder eines Tieres in der Umgebung auszuwerten, vorzugsweise durch Vergleichen mit entsprechend vorgegebenen Informationen. Es ist auch möglich, dass die erfasste Umgebung zum Erkennen eines Gesundheitszustands und/oder eines Wachstumszustandes eines Pflanzenbestandes der Umgebung ausgewertet wird, vorzugsweise durch Vergleichen mit entsprechend vorgegebenen Informationen. Der erkannte Wachstumszustand und/oder Gesundheitszustand kann zweckmäßig zum Anpassen einer Verteilung einer Verteilgutmenge von landwirtschaftlichen Verteilgütern durch die Arbeitsmaschine verwendet werden, z. B. Düngerausbringung, Pflanzenschutzmittelausbringung usw.

In einem weiteren Aspekt bezieht sich die vorliegende Offenbarung auf eine (z. B. teil- oder vollautonome) mobile landwirtschaftliche Arbeitsmaschine (z. B. Feldspritze, Düngerstreuer, Sämaschine, Zugmaschine, Traktor, Erntemaschine, Mähdrescher oder Feldhäcksler). Vorzugsweise kann die Arbeitsmaschine manuell fahrbar und/oder autonom betreibbar sein. Die Arbeitsmaschine weist eine Sicherheitsvorrichtung wie hierin offenbart und eine Steuereinheit auf. Die Steuereinheit kann vorzugsweise dazu ausgebildet sein, einen Betrieb der mobilen landwirtschaftlichen Arbeitsmaschine in Abhängigkeit von dem Auswerten der Auswerteeinrichtung anzupassen.

Vorzugsweise kann sich der Begriff "Steuereinheit" auf eine Elektronik (z. B. mit Mikroprozessor(en) und Datenspeicher) oder eine mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

In einer Weiterbildung ist die Steuereinheit dazu ausgebildet, einen (z. B. akustischen, visuellen und/oder haptischen) Warnhinweis auszugeben und/oder die mobile landwirtschaftliche Arbeitsmaschine, vorzugweise automatisch, abzubremsen, anzuhalten, umzulenken, stillzulegen, in einen sicheren Zustand zu überführen, in eine manuelle Betriebsart zu überführen und/oder eine Behandlung (z. B. Bodenbehandlung und/oder Pflanzenbehandlung) durch die mobile landwirtschaftliche Arbeitsmaschine zu stoppen. Als Bedingung hierfür kann beispielsweise erkannt werden, dass die mobile landwirtschaftliche Arbeitsmaschine in den zum Befahren nicht zugelassenen Bereich der Umgebung einfährt und/oder sich diesem annähert; und/oder die mobile landwirtschaftliche Arbeitsmaschine in dem zum Befahren nicht zugelassenen Bereich der Umgebung fährt und/oder betrieben wird; und/oder die mobile landwirtschaftliche Arbeitsmaschine die zum Befahren zugelassene landwirtschaftliche Nutzfläche verlässt.

In einem weiteren Ausführungsbeispiel ist die Sensorvorrichtung zum Erfassen eines an die mobile landwirtschaftliche Arbeitsmaschine angrenzenden Bereichs der Umgebung, vorzugsweise vor, neben und/oder hinter der mobilen landwirtschaftlichen Arbeitsmaschine, angeordnet. Alternativ oder zusätzlich ist die Sensorvorrichtung zum Erfassen eines Bereichs der Umgebung entlang einer gesamten Arbeitsbreite der mobilen landwirtschaftlichen Arbeitsmaschine, vorzugsweise entlang einer gesamten Arbeitsbreite eines Arbeitsgeräts, zum Beispiel eines Verteilgestänges, der mobilen landwirtschaftlichen Arbeitsmaschine, angeordnet.

Ein weiterer Aspekt der vorliegenden Offenbarung betrifft ein Verfahren zum Betreiben einer mobilen landwirtschaftlichen Arbeitsmaschine. Das Verfahren kann das hierin offenbarte Sicherheitssystem und/oder die hierin offenbarte mobile landwirtschaftliche Arbeitsmaschine verwenden. Das Verfahren weist ein Vorgeben von Umgebungsinformationen, die einer zum Befahren zugelassenen landwirtschaftlichen Nutzfläche (z. B. Ackerfläche) zugeordnet sind, auf. Das Verfahren weist ein Erfassen einer Umgebung der mobilen landwirtschaftlichen Arbeitsmaschine, vorzugsweise eines Bodenbereichs (umfassend Boden, Pflanzenbestand usw.) der Umgebung, auf (z. B. mittels einer Sensorvorrichtung der Arbeitsmaschine). Das Verfahren weist ein Auswerten der erfassten Umgebung zum Erkennen der zum Befahren zugelassenen landwirtschaftlichen Nutzfläche und/oder eines zum Befahren nicht zugelassenen Bereichs der Umgebung auf (z. B. mittels einer Auswerteeinrichtung der Arbeitsmaschine). Das Verfahren kann die gleichen Vorteile erzielen, wie hierin für die Sicherheitsvorrichtung offenbart ist.

In einer Weiterbildung weisen die vorgegebenen Umgebungsinformationen vorgegebene Farbinformationen und/oder vorgegebene Strukturinformationen auf, die der zum Befahren zugelassenen landwirtschaftlichen Nutzfläche zugeordnet sind. Es ist möglich, dass die vorgegebenen Farbinformationen und/oder vorgegebenen Strukturinformationen so ausgeführt sind, wie hierin für die Sicherheitsvorrichtung beschrieben ist.

In einer Ausführungsform weist das Auswerten ein Vergleichen mit den vorgegebenen Umgebungsinformationen auf. Vorzugsweise kann in der erfassten Umgebung eine Fläche gesucht werden, deren Umgebungsinformationen (z. B Strukturinformationen und/oder Farbinformationen) mit den vorgegebenen Umgebungsinformationen (z. B Strukturinformationen und/oder Farbinformationen) übereinstimmen, sodass eine Ausdehnung dieser Fläche als eine Ausdehnung der zum Befahren zugelassenen landwirtschaftlichen Nutzfläche erkannt wird. Alternativ oder zusätzlich kann in der erfassten Umgebung eine Fläche gesucht wird, deren Umgebungsinformationen (z. B Strukturinformationen und/oder Farbinformationen) nicht mit den vorgegebenen Umgebungsinformationen (z. B Strukturinformationen und/oder Farbinformationen) übereinstimmen, sodass eine Ausdehnung dieser Fläche als eine Ausdehnung des zum Befahren nicht zugelassenen Bereichs der Umgebung erkannt wird.

In einer weiteren Ausführungsform erfolgt das Vorgeben von Umgebungsinformationen direkt in der Umgebung, vorzugsweise vor oder während einer Boden- und/oder Pflanzenbehandlung durch die mobile landwirtschaftliche Arbeitsmaschine und/oder unter Verwendung einer Sensorvorrichtung der mobilen landwirtschaftlichen Arbeitsmaschine, wobei die Sensorvorrichtung die Umgebung, vorzugsweise einen Bodenbereich der Umgebung, erfasst.

Es ist möglich, dass das Verfahren ferner ein Anpassen eines Betriebs der mobilen landwirtschaftlichen Arbeitsmaschine in Abhängigkeit von dem Auswerten aufweist. Beispielsweise kann ein (z. B. akustischer, visueller und/oder haptischer) Warnhinweis ausgegeben werden und/oder die mobile landwirtschaftliche Arbeitsmaschine, vorzugweise automatisch, abbremsen, anhalten, umgelenkt werden, stillgelegt werden, in einen sicheren Zustand überführt werden, in eine manuelle Betriebsart überführt werden und/oder eine Behandlung (z. B. Bodenbehandlung und/oder Pflanzenbehandlung) durch die mobile landwirtschaftliche Arbeitsmaschine gestoppt werden. Mögliche Bedingung hierfür wurden bereits in Bezug auf die hierin offenbarte Arbeitsmaschine beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Seitenansicht einer mobilen landwirtschaftlichen Arbeitsmaschine; und
- Figur 2: eine schematische Draufsicht auf eine landwirtschaftliche Nutzfläche, auf der eine mobile landwirtschaftliche Arbeitsmaschine betrieben wird.

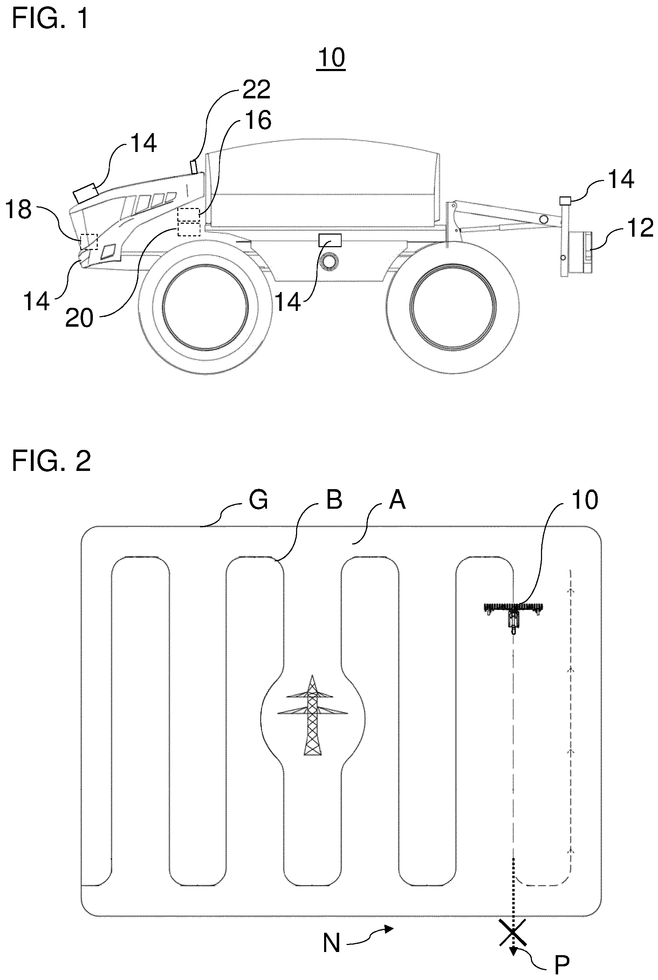

Die Figur 1 zeigt eine mobile landwirtschaftliche Arbeitsmaschine 10. Beispielhaft ist die Arbeitsmaschine 10 als eine selbstfahrende Feldspritze ausgeführt. Die Feldspritze kann flüssige Medien, z. B. Dünger, Pflanzenschutzmittel oder dgl., über ein Behandlungsgerät (Arbeitsgerät) 12 z. B. in Form eines Verteilgestänges (Spritzgestänges) auf einer landwirtschaftlichen Nutzfläche verteilen.

Es ist möglich, dass die Arbeitsmaschine 10 nicht selbstfahrend ausgeführt ist, sondern beispielsweise von einem angetriebenen Fahrzeug, z. B. einem Traktor, bewegt, vorzugsweise gezogen, wird. Es ist auch möglich, dass die Arbeitsmaschine 10 ein alternatives oder zusätzliches Behandlungsgerät 12 zur Boden- und/oder Pflanzenbehandlung aufweist.

Zum Beispiel kann die Arbeitsmaschine 10 alternativ als ein Düngerstreuer oder eine Saatmaschine ausgeführt sein. Die Arbeitsmaschine 10 kann gemäß einer alternativen Ausführungsvariante auch eine Maschine zur Bodenbearbeitung und/oder zur Aussaat sein und beispielsweise ein Behandlungsgerät 12 zur Bodenbearbeitung und/oder zur Aussaat von landwirtschaftlichem Saatgut, Dünger oder dergl. umfassen. Die Arbeitsmaschine 10 kann auch ein Trägerfahrzeug sein, an welchem wiederum Bodenbearbeitungswerkzeuge, Säschare oder Spritzgestänge oder dergl. angebaut werden können. Die Arbeitsmaschine 10 kann auch ein für die Landwirtschaft geeignetes Zugfahrzeug (z. B. Traktor) sein oder aufweisen. An das Zugfahrzeug kann wiederum eine Maschine zur Bodenbearbeitung und/oder zur Aussaat oder zur Verteilung von Pflanzenschutzmittel angebaut werden oder mittels diesem über eine Ackerfläche gezogen werden. Auch könnte die Arbeitsmaschine 10 eine Erntemaschine wie beispielsweise ein Feldhäcksler oder Mähdrescher oder dergl. sein. Generell kann die Arbeitsmaschine 10 somit jegliche Arbeitsmaschine sein, welche für den landwirtschaftlichen Einsatz geeignet ist.

Die Arbeitsmaschine 10 kann manuell von einem Benutzer / Fahrer gesteuert werden, beispielsweise mittels eines in der Arbeitsmaschine 10 vorhandenen Bedienfeldes. Es ist auch möglich, dass die Arbeitsmaschine 10 zusätzlich oder alternativ teilautonom oder vollautonom betreibbar ist.

Die Arbeitsmaschine 10 weist ein Sicherheitssystem auf, das eine Sensorvorrichtung 14 und eine Auswerteeinrichtung 16 umfasst. Das Sicherheitssystem kann in einem manuellen, teilautonomen oder vollautonomen Betriebsmodus der Arbeitsmaschine 10 verwendet werden. Das Sicherheitssystem kann besonders bevorzugt mit der Arbeitsmaschine 10 verwendet werden. Es ist aber auch möglich, dass das Sicherheitssystem mit anderen Fahrzeugen verwendet wird.

Das Sicherheitssystem kann verhindern, dass die Arbeitsmaschine 10 unbeabsichtigt eine Arbeitsfläche (Ackerfläche) verlässt, d. h. in einen zum Befahren nicht zugelassenen Bereich fährt. So kann beispielsweise verhindert werden, dass eine Bodenbehandlung außerhalb der Arbeitsfläche durchgeführt wird oder gefährliche Situationen mit der Arbeitsmaschine 10 außerhalb der Arbeitsfläche entstehen, insbesondere im teilautonomen oder vollautonomen Betrieb der Arbeitsmaschine 10, z. B. wenn sich die Arbeitsmaschine 10 einer Straße, einer Böschung oder einem Gebäude nähert.

Die Sensorvorrichtung 14 kann eine Umgebung bzw. ein Umfeld, insbesondere einen Bodenbereich der Umgebung, um die Arbeitsmaschine 10 zumindest teilweise erfassen. Bevorzugt kann die Sensorvorrichtung 14 einen Bereich in Vorwärtsfahrtrichtung vor der Arbeitsmaschine 10 erfassen. Alternativ oder zusätzlich können auch Bereiche an einer oder beiden Längsaußenseiten der Arbeitsmaschine 10 und/oder hinter der Arbeitsmaschine 10 erfasst werden. Die Sensorvorrichtung 14 kann auch so angeordnet sein, dass ein Bereich vor, unter, hinter und/oder neben dem Arbeitsgerät 12 erfassbar ist, vorzugsweise entlang einer gesamten Arbeitsbreite des Arbeitsgeräts 12 (zum Beispiel bis zu 30 Meter oder mehr bei einem großen Verteilgestänge als das Arbeitsgerät 12).

Zum Erfassen der Umgebung kann die Sensorvorrichtung 14 eine oder mehrere Sensoren aufweisen. Die Sensoren können an der Arbeitsmaschine 10 angebracht sein, zum Beispiel an einer Vorderseite, einer Rückseite, Längsaußenseiten und/oder einer Oberseite der Arbeitsmaschine 10. Es ist auch möglich, dass beispielsweise mindestens ein Sensor an dem Arbeitsgerät 12 angebracht ist, wobei vorzugsweise mehrere Sensoren voneinander beabstandet entlang einer gesamten Arbeitsbreite des Arbeitsgeräts 12 angeordnet sind.

Die Sensorvorrichtung 14 kann dazu ausgebildet sein, Farbinformationen (Emissionsspektren, Farbspektren, Wellenlängen des sichtbaren Lichts usw.) der Umgebung, insbesondere des Bodenbereichs (Untergrund und Pflanzenbestand) der Umgebung zu erfassen.

Die Sensorvorrichtung 14 kann auch dazu ausgebildet sein, Strukturinformationen der Umgebung, insbesondere des Bodenbereichs (Untergrund und Pflanzenbestand) der Umgebung zu erfassen. Zu solchen Strukturinformationen können beispielsweise eine Anordnung, ein Reihenabstand und/oder eine Ausrichtung von Reihen einer landwirtschaftlichen Reihenkultur zählen. Es ist auch möglich, dass als Strukturinformationen eine Anordnung und/oder Ausrichtung von Dämmen und/oder ein Relief eines Bodens erfasst wird.

Beispielsweise kann die Sensorvorrichtung 14 eine (Farb- oder Schwarz-/Weiss-) Kameravorrichtung, einen Lichtsensor, einen Farbsensor, einen CMOS-Sensor, einen CCD-Sensor, ein Spektrometer, eine (Boden-) Radarvorrichtung und/oder eine Laserscannervorrichtung aufweisen.

Die Auswerteeinrichtung 16 steht zum Empfangen der erfassten Umgebungsinformationen in Kommunikationsverbindung mit der Sensorvorrichtung 14. Die Auswerteeinrichtung 16 wertet die empfangenen Umgebungsinformationen nach einer vorgegebenen Vorschrift aus, um eine zum Befahren zugelassene landwirtschaftliche Arbeitsfläche und/oder einen zum Befahren nicht zugelassenen Bereich im Umfeld der Arbeitsmaschine 10 zu erkennen.

Beispielweise kann die Auswerteeinrichtung 16 erfasste Wellenlängen oder Wellenlängenbereiche mit vorgegebenen Wellenlängen oder Wellenlängenbereichen vergleichen. Es ist möglich, dass die Auswerteeinrichtung 16 eine Spektralanalyse auf die erfassten Farbinformationen anwendet, um beispielsweise einen genauen Vergleich mit vorgegebenen Farbinformationen zu ermöglichen. Die Auswerteeinrichtung 16 kann auch die erfasste Umgebung mit vorgegebenen Strukturinformationen zum Erkennen der zum Befahren zugelassene landwirtschaftliche Arbeitsfläche und/oder des zum Befahren nicht zugelassenen Bereichs vergleichen.

Die Auswerteeinrichtung 16 kann für die Erkennung vorgegebene Farbinformationen nutzen, die der zum Befahren zugelassenen landwirtschaftlichen Nutzfläche zugeordnet sind. Die vorgegebenen Farbinformationen können sich beispielsweise auf einen oberen (Farb-)Grenzwert, einen unteren Farbgrenzwert und/oder ein Farbspektrumsabschnitt für die zum Befahren zugelassene landwirtschaftliche Nutzfläche beziehen. Beispielsweise kann so eine zum Befahren zugelassene Ackerfläche von einem zum Befahren nicht zugelassenen Gebiet um die Ackerfläche herum unterschieden werden. Beispielsweise kann die Ackerfläche durch eine im Wesentlichen gelbbraune Färbung aufgrund eines Getreidebewuchses oder durch eine im Wesentlichen braune Färbung aufgrund des Bodens ohne jeden Pflanzenbewuchs gekennzeichnet sein. Werden von der Auswerteeinrichtung 16 Farbinformationen ausgewertet, die von der vorgegebenen Farbinformation, z. B. gelbbraun bzw. braun, (wesentlich) abweichen, kann erkannt werden, dass die ausgewerteten Farbinformationen auf einen Bereich der Umgebung außerhalb der Ackerfläche hinweisen. So können beispielsweise Straßen, Feldgrenzen oder Wiesen neben der Ackerfläche erkannt werden.

Die Auswerteeinrichtung 16 kann für die Erkennung vorgegebene Strukturinformationen nutzen, die der zum Befahren zugelassenen landwirtschaftlichen Nutzfläche zugeordnet sind. Die vorgegebenen Strukturinformationen können sich beispielsweise auf eine Anordnung, insbesondere einen Reihenabstand, von Reihen einer Reihenkultur der zum Befahren zugelassenen landwirtschaftlichen Nutzfläche beziehen. Beispielsweise kann ein Vorhandensein einer Reihenkultur und/oder ein Reihenabstand der Reihenkultur vorgegeben sein. Wird oder werden diese in einem Bereich der erfassten Umgebungsinformationen erkannt, kann die Auswerteeinrichtung 16 folglich in diesem Bereich die zum Befahren zugelassenen landwirtschaftliche Nutzfläche erkennen. Die vorgegebenen Strukturinformationen können sich beispielsweise auch auf eine Anordnung von Dämmen der zum Befahren zugelassenen landwirtschaftlichen Nutzfläche und/oder auf ein Relief der zum Befahren zugelassenen landwirtschaftlichen Nutzfläche beziehen. Wird beispielsweise ein vorgegebenes (Boden-)Relief in einem Bereich der erfassten Umgebungsinformationen erkannt, kann die Auswerteeinrichtung 16 folglich in diesem Bereich die zum Befahren zugelassenen landwirtschaftliche Nutzfläche erkennen.

Zweckmäßig können die vorgegebenen Umgebungsinformationen (z. B. Farbinformationen und/oder Strukturinformationen) für die zum Befahren zugelassene landwirtschaftliche Nutzfläche mittels einer Benutzerschnittstelle 18 der Arbeitsmaschine 10 eingegeben werden. Besonders bevorzugt werden die Umgebungsinformationen direkt in der entsprechenden Umgebung mittels den Sensorvorrichtung 14 erfasst und mittels der Benutzerschnittstelle 18 bestätigt oder ausgewählt und daraufhin beispielsweise abgespeichert.

So kann beispielsweise vor oder zu Beginn der Arbeiten auf einem Getreidefeld die Farben des Getreides von der Sensorvorrichtung 14 erfasst werden, z. B. ein enges Farbspektrum im Bereich gelbbraun mit einem oberen (braunen) Grenzwert und einem unteren (gelben) Grenzwert, und als vorgegebene Farbinformationen abgespeichert werden. Es ist möglich, dass die Farbinformationen unterschiedliche Belichtungsstärken berücksichtigen. Die erfassten Farbinformationen werden (z. B. manuell oder automatisch) dem zum Befahren zugelassenen Bereich zugeordnet, da nachfolgend auf dem Getreidefeld Arbeiten vorgenommen werden sollen (z. B. Ernten, Behandeln der Pflanzen, Düngen der Pflanzen usw.). Wird später während des Betriebs der Arbeitsmaschine 10 von der Auswerteeinrichtung 16 erkannt, dass Farbinformationen erfasst wurden, die oberhalb oder unterhalb des vorgegeben engen Farbspektrums liegen, so kann erkannt werden, dass dieser Bereich der Umgebung ein zum Befahren nicht zugelassener Bereich außerhalb der landwirtschaftlichen Nutzfläche ist, z. B. eine Wiese, eine Straße, ein Kanal usw.

Es ist auch möglich, dass vor oder zu Beginn der Arbeiten in einer landwirtschaftlichen Reihenkultur einzelne Reihen der Reihenkultur von der Sensoreinrichtung 14 erfasst werden, z. B. ein Reihenabstand der Reihen der landwirtschaftlichen Reihenkultur. Wird später während des Betriebs der Arbeitsmaschine 10 von der Auswerteeinrichtung 16 erkannt, dass Strukturinformationen der Umgebung erfasst wurden, die nicht mehr mit der vorgegebenen Reihenkultur übereinstimmen, so kann erkannt werden, dass dieser Bereich der Umgebung ein zum Befahren nicht zugelassener Bereich außerhalb der landwirtschaftlichen Nutzfläche ist, z. B. eine Wiese, eine Straße, ein Kanal usw. Auf ähnliche Weise kann dies mit anderen Strukturinformationen durchgeführt werden, z. B. einem Relief des Bodens und/oder Dämmen auf oder angrenzend an die landwirtschaftliche Nutzfläche.

Beispielsweise sucht die Auswerteeinrichtung 16 in der von der Sensorvorrichtung 14 erfassten Umgebung eine Fläche, deren Farbinformationen und/oder Strukturinformationen mit den vorgegebenen Farbinformationen und/oder Strukturinformationen übereinstimmen. Wird eine solche Fläche gefunden, kann die Auswerteeinheit 16 eine Längen- und Breitenausdehnung dieser Fläche als eine Längen- und Breitenausdehnung der zum Befahren zugelassenen landwirtschaftlichen Nutzfläche A erkennen. Alternativ oder zusätzlich kann die Auswerteeinrichtung 16 eine Fläche der erfassten Umgebung, deren Umgebungsinformationen nicht mit den vorgegebenen Umgebungsinformationen übereinstimmen, in der erfassten Umgebung suchen. Wird eine solche Fläche gefunden, kann ein Längen- und Breitenausdehnung dieser Fläche dann als eine Längen- und Breitenausdehnung des zum Befahren nicht zugelassenen Bereichs B erkannt werden.

Es ist möglich, dass eine Steuereinheit 20 der Arbeitsmaschine 10 einen Betrieb der Arbeitsmaschine 10 an die Auswertung der Auswerteeinrichtung 16 anpasst. Besonders zweckmäßig kann die Steuereinheit 20 darauf reagieren, wenn die Auswerteeinrichtung 16 einen zum Befahren nicht zugelassenen Bereich außerhalb der landwirtschaftlichen Nutzfläche erkannt hat.

Beispielsweise kann die Steuereinheit 20 die Ausgabe eines akustischen, visuellen oder optischen Warnhinweises bewirken, wenn die Arbeitsmaschine 10 sich einem zum Befahren nicht zugelassenen Bereich annähert, in diesen einfährt und/oder sich bereits in diesem befindet. Der Warnhinweis kann beispielsweise über die Benutzerschnittstelle 18 an einen Benutzer der Arbeitsmaschine 10 ausgegeben werden. Alternativ oder zusätzlich kann der Warnhinweis auch von der Arbeitsmaschine 10 in eine Umgebung der Arbeitsmaschine 10 ausgegeben werden, insbesondere wenn die Arbeitsmaschine 10 (teil- oder voll-) autonom betrieben wird.

Es ist möglich, dass die Steuereinheit 20 einen Betrieb der Arbeitsmaschine 10 anhält, wenn die Arbeitsmaschine 10 sich einem zum Befahren nicht zugelassenen Bereich annähert, in diesen einfährt und/oder sich bereits in diesem befindet. Zum Beispiel kann die Arbeitsmaschine 10, vorzugsweise automatisch, abgebremst, angehalten, umgelenkt, stillgelegt, in einen sicheren Zustand überführt, in eine manuelle Betriebsart überführt und/oder eine Behandlung (z. B. Bodenbehandlung und/oder Pflanzenbehandlung) durch die landwirtschaftliche Arbeitsmaschine gestoppt werden. Damit kann verhindert werden, dass die Arbeitsmaschine 10 auf dem zum Befahren nicht zugelassenen Bereich ungewünscht betrieben wird. Statt eines automatischen Eingriffs kann die Steuereinheit auch einen Benutzer der Arbeitsmaschine 10 zu einer oder mehreren der genannten Betriebsanpassungen auffordern, z. B. mittels der Benutzerschnittstelle 18.

Die Steuereinheit 20 kann optional dazu ausgebildet sein, die Arbeitsmaschine 10 in einem vorgegebenen räumlichen Arbeitsbereich entlang eines vorgegebenen Bewegungspfads, vorzugsweise aufweisend eine Mehrzahl von parallelen Bahnen oder Spuren, autonom zu fahren oder einen Benutzer, der die Arbeitsmaschine 10 fährt, entlang des Bewegungspfads zu führen. Zur Verdeutlichung zeigt die Figur 2 einen beispielhaften Bewegungspfad B in einem vorgegebenen räumlichen Arbeitsbereich A. Der Arbeitsbereich A ist eine landwirtschaftliche Nutzfläche bzw. Ackerfläche, wie beispielsweise eine Fläche zum Anbau von Getreide. Der Arbeitsbereich A ist durch eine (Feld-) Grenze G nach außen hin begrenzt.

Der Bewegungspfad B kann vor Beginn der Arbeit beispielsweise mittels eines Spurplanungstools vorgegeben werden. Im Betrieb bewegt sich die Arbeitsmaschine 10 autonom oder vom Benutzer geführt entlang des vorgegebenen Bewegungspfads B. Der Bewegungspfad B kann so geplant sein, dass die jeweils optimalen Fahrspuren für die Arbeitsmaschine 10 vorgegeben werden, z. B. um zweckmäßig vorzugeben, in welcher Reihenfolge der Arbeitsbereich A befahren werden soll. Durch eine derartige Spurplanung können beispielsweise Hindernisse entsprechend in der Planung des Bewegungspfads B berücksichtigt werden. Der Bewegungspfad B kann auch derartig vorgegeben werden, dass doppelte Überfahrten von Teilabschnitten des Arbeitsbereichs A zumindest weitgehend vermieden werden. Derartige Spurplanungstools können beispielsweise an eine Technik angelehnt sein, die als sogenanntes "Controlled Traffic Farming (CTF)" bekannt ist.

Neben dem Bewegungspfad B kann zudem beispielsweise noch vorgegeben werden, mit welcher Fahrgeschwindigkeit sich das Arbeitsfahrzeug 10 an welcher Stelle des Arbeitsbereichs A bewegen darf oder soll. Es kann beispielsweise auch vorgegeben werden, wo (Position) und/oder wie (z. B. Intensität) das jeweilige Behandlungsgerät 12 entlang des Bewegungspfads B zu betreiben ist (z. B. Verteilung von Verteilgut, Ernte von Erntegut oder dgl.).

Um eine Führung der Arbeitsmaschine 10 entlang des Bewegungspfads B zu ermöglichen, kann die Arbeitsmaschine 10 zusätzlich mindestens eine Positionsbestimmungsvorrichtung 22 aufweisen (siehe Figur 1). Bei mehreren Positionsbestimmungsvorrichtungen können diese beispielsweise unabhängig voneinander eine aktuelle Position der Arbeitsmaschine 10 ermitteln. Die Positionsbestimmungsvorrichtung 22 kann beispielsweise als satellitengestützte (globale) oder als lokale Positionsbestimmungsvorrichtungen ausgeführt sein.

Wie in Figur 2 beispielhaft dargestellt ist, ist es möglich, dass es während der (autonomen oder manuellen) Führung entlang des Bewegungspfads B unter Verwendung von aktuellen Positionsdaten der Arbeitsmaschine 10, die von der Positionsbestimmungsvorrichtung 22 bestimmt werden, zu einer Fehlfunktion der Führung kommt (siehe Pfeil P). Die Fehlfunktion kann beispielsweise durch eine Fehlfunktion oder Ungenauigkeit der Positionsbestimmungsvorrichtung 22 ausgelöst werden. Das hierin offenbarte Sicherheitssystem mit der Sensorvorrichtung 14 und der Auswerteeinrichtung 16 kann nun wirksam verhindern, dass die Arbeitsmaschine 10 die Grenze G überfährt. Die Auswerteeinrichtung 16 stellt fest, dass die Arbeitsmaschine 10 beim Halten des aktuell geplanten Kurses in Kürze in den nicht zum Befahren zugelassenen Bereich N einfährt bzw. den zum Befahren zugelassenen Bereich A verlässt. Erkannt wird dies beispielsweise durch die Farbe des Bereichs N, der z. B. eine grüne Wiese oder ein hellbrauner Weg o.Ä. ist, da diese Farbe von der Farbe des zum Befahren zugelassenen Bereichs A (z. B. dunkelbrauner Boden oder gelbbraunes Getreide) abweicht. Alternativ oder zusätzlich kann dies beispielsweise auch daran erkannt werden, dass im Bereich N keine Reihenkulturen oder Dämme oder ein anderes Bodenrelief als im Arbeitsbereich A vorhanden ist.

Es ist möglich, dass die Auswerteeinrichtung 16 zusätzlich dazu eingerichtet ist, die erfassten Informationen zum Erkennen einer Person, eines Gegenstands und/oder eines Tieres in der Umgebung auszuwerten. Beispielsweise können entsprechende Vergleichsfarbinformationen oder Vergleichsstrukturinformationen fest oder anpassbar vorgegeben sein.

Es ist auch möglich, dass die erfassten Umgebungsinformationen, insbesondere die erfassten Farbinformationen der Umgebung, zum Erkennen eines Gesundheitszustands und/oder eines Wachstumszustandes eines Pflanzenbestandes der Umgebung von der Auswerteeinrichtung 16 ausgewertet werden. Auch hierfür können entsprechende Vergleichsfarbinformationen vorgegeben sein. Die ermittelten Werte für den Gesundheitszustand und/oder den Wachstumszustand können zum Anpassen einer jeweiligen Verteilgutmenge von landwirtschaftlichen Verteilgütern verwendet werden, die von dem Arbeitsgerät 12 ausbringbar sind, z. B. Düngerausbringung, Pflanzenschutzmittelausbringung usw.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart und beispielsweise unabhängig von dem Vorhandensein und/oder der Konfiguration der Sensorvorrichtung und/oder der Auswertevorrichtung offenbart.

### Bezugszeichenliste

- 10: Mobile landwirtschaftliche Arbeitsmaschine
- 12: Behandlungsgerät / Arbeitsgerät
- 14: Sensorvorrichtung
- 16: Auswerteeinrichtung
- 18: Benutzerschnittstelle
- 20: Steuereinheit
- 22: Positionsbestimmungsvorrichtung

- A: Arbeitsbereich / zum Befahren zugelassene landwirtschaftliche Nutzfläche
- B: Bewegungspfad
- G: Grenze
- N: Zum Befahren nicht zugelassener Bereich
- P: Pfeil

## Patentansprüche

1. Sicherheitssystem für eine mobile landwirtschaftliche Arbeitsmaschine (10), aufweisend:
eine Sensorvorrichtung (14), die dazu ausgebildet ist, eine Umgebung, vorzugsweise einen Bodenbereich der Umgebung, zu erfassen; und
eine Auswerteeinrichtung (16), die:
- dazu ausgebildet ist, die erfasste Umgebung unter Berücksichtigung von vorgegebenen Umgebungsinformationen, die einer zum Befahren zugelassenen landwirtschaftlichen Nutzfläche, nämlich einer Ackerfläche, zugeordnet sind, auszuwerten; und
- dazu ausgebildet ist, basierend auf der Auswertung die zum Befahren zugelassene landwirtschaftliche Nutzfläche und einen zum Befahren nicht zugelassenen Bereich (N) in der erfassten Umgebung zu erkennen;
**gekennzeichnet durch**
eine Benutzerschnittstelle (18) für die mobile landwirtschaftliche Arbeitsmaschine (10), wobei mittels der Benutzerschnittstelle (18) vorgebbar ist, dass von der Sensorvorrichtung (14) erfasste Umgebungsinformationen, nämlich Strukturinformationen und/oder Farbinformationen, als die vorgegebenen Umgebungsinformationen abgespeichert werden, wobei bei Ankunft der Arbeitsmaschine auf der Ackerfläche zunächst ein Farbspektrum oder eine Struktur der Ackerfläche erfasst und so die zum Befahren zugelassene landwirtschaftliche Nutzfläche festgelegt wird.

2. Sicherheitssystem nach Anspruch 1, wobei die Auswerteeinrichtung ferner dazu ausgebildet ist:
in der erfassten Umgebung eine Fläche zu finden, deren Umgebungsinformationen mit den vorgegebenen Umgebungsinformationen übereinstimmen, sodass eine Ausdehnung dieser Fläche als eine Ausdehnung der zum Befahren zugelassenen landwirtschaftlichen Nutzfläche (A) erkannt wird; und/oder
in der erfassten Umgebung eine Fläche zu finden, deren Umgebungsinformationen nicht mit den vorgegebenen Umgebungsinformationen übereinstimmen, sodass eine Ausdehnung dieser Fläche als eine Ausdehnung des zum Befahren nicht zugelassenen Bereichs (N) erkannt wird.

3. Sicherheitssystem nach Anspruch 1 oder Anspruch 2, wobei:
die vorgegebenen Umgebungsinformationen vorgegebene Farbinformationen aufweisen, die der zum Befahren zugelassenen landwirtschaftlichen Nutzfläche zugeordnet sind,
wobei vorzugsweise:
die vorgegebenen Farbinformationen einen Grenzwert und/oder einen Abschnitt eines Farbspektrums aufweisen; und/oder
die vorgegebenen Farbinformationen sich auf eine Färbung der zum Befahren zugelassenen landwirtschaftlichen Nutzfläche beziehen.

4. Sicherheitssystem nach Anspruch 3, wobei:
die vorgegebenen Farbinformationen einen unteren Grenzwert eines Farbspektrums aufweisen, bei dessen Unterschreiten ein zum Befahren nicht zugelassener Bereich (N) der Umgebung erkannt wird und/oder bei dessen Überschreiten die zum Befahren zugelassene landwirtschaftliche Nutzfläche (A) erkannt wird; und/oder
die vorgegebenen Farbinformationen für den zum Befahren zugelassenen Bereich (A) einen Abschnitt eines Farbspektrums aufweisen, in dem die zum Befahren zugelassene landwirtschaftliche Nutzfläche (A) erkannt wird und/oder außerhalb dessen ein zum Befahren nicht zugelassener Bereich (N) der Umgebung erkannt wird; und/oder
die vorgegebenen Farbinformationen für den zum Befahren zugelassenen Bereich (A) einen oberen Grenzwert eines Farbspektrums aufweisen, bei dessen Überschreiten ein zum Befahren nicht zugelassener Bereich (N) erkannt wird und/oder bei dessen Unterschreiten die zum Befahren zugelassene landwirtschaftliche Nutzfläche (A) erkannt wird.

5. Sicherheitssystem nach einem der vorherigen Ansprüche, wobei:
die vorgegebenen Umgebungsinformationen vorgegebene Strukturinformationen aufweisen, die der zum Befahren zugelassenen landwirtschaftlichen Nutzfläche zugeordnet sind, wobei vorzugsweise:
die vorgegebenen Strukturinformationen sich auf ein Muster und/oder eine unregelmäßige Struktur der zum Befahren zugelassenen landwirtschaftlichen Nutzfläche beziehen.

6. Sicherheitssystem nach Anspruch 5, wobei:
die vorgegebenen Strukturinformationen sich auf eine Anordnung, insbesondere einen Reihenabstand, von Reihen einer Reihenkultur der zum Befahren zugelassenen landwirtschaftlichen Nutzfläche (A) beziehen; und/oder
die vorgegebenen Strukturinformationen sich auf eine Anordnung von Dämmen der zum Befahren zugelassenen landwirtschaftlichen Nutzfläche (A) beziehen; und/oder
die vorgegebenen Strukturinformationen sich auf ein Relief der zum Befahren zugelassenen landwirtschaftlichen Nutzfläche (A) beziehen.

7. Sicherheitssystem nach einem der vorherigen Ansprüche,
wobei die vorgegebenen Umgebungsinformationen mittels der Benutzerschnittstelle (18) eingebbar sind.

8. Sicherheitssystem nach einem der vorherigen Ansprüche, wobei die Sensorvorrichtung (14) mindestens eines aufweist von:
einer Kameravorrichtung, vorzugsweise Farbkameravorrichtung, einem Lichtsensor, einem Farbsensor, einem CMOS-Sensor, einem CCD-Sensor, einem Spektrometer, einer Radarvorrichtung, vorzugsweise Bodenradarvorrichtung, und/oder einer Laserscannervorrichtung.

9. Sicherheitssystem nach einem der vorherigen Ansprüche, wobei die Auswerteeinrichtung (16) ferner dazu ausgebildet ist,
die erfasste Umgebung zum Erkennen einer Person, eines Gegenstands und/oder eines Tieres in der Umgebung auszuwerten, vorzugsweise durch Vergleichen mit entsprechend vorgegebenen Informationen; und/oder
die erfasste Umgebung zum Erkennen eines Gesundheitszustands und/oder eines Wachstumszustandes eines Pflanzenbestandes der Umgebung auszuwerten, vorzugsweise durch Vergleichen mit entsprechend vorgegebenen Informationen.

10. Mobile landwirtschaftliche Arbeitsmaschine (10), die vorzugsweise manuell fahrbar und/oder autonom betreibbar ist, wobei die Arbeitsmaschine (10) aufweist:
eine Sicherheitsvorrichtung nach einem der vorherigen Ansprüche; und
eine Steuereinheit (20), die dazu ausgebildet ist, einen Betrieb der mobilen landwirtschaftlichen Arbeitsmaschine (10) in Abhängigkeit von dem Auswerten der Auswerteeinrichtung (16) anzupassen.

11. Mobile landwirtschaftliche Arbeitsmaschine (10) nach Anspruch 10, wobei die Steuereinheit (20) dazu ausgebildet ist:
einen Warnhinweis auszugeben; und/oder
die mobile landwirtschaftliche Arbeitsmaschine (10), vorzugweise automatisch, abzubremsen, anzuhalten, umzulenken, stillzulegen, in einen sicheren Zustand zu überführen, in eine manuelle Betriebsart zu überführen und/oder eine Behandlung durch die mobile landwirtschaftliche Arbeitsmaschine (10) zu stoppen,
wenn:
- die mobile landwirtschaftliche Arbeitsmaschine (10) in den zum Befahren nicht zugelassenen Bereich (N) der Umgebung einfährt und/oder sich diesem annähert; und/oder
- die mobile landwirtschaftliche Arbeitsmaschine (10) in dem zum Befahren nicht zugelassenen Bereich (N) der Umgebung fährt und/oder betrieben wird; und/oder
- die mobile landwirtschaftliche Arbeitsmaschine (10) die zum Befahren zugelassenen landwirtschaftliche Nutzfläche (A) verlässt.

12. Mobile landwirtschaftliche Arbeitsmaschine (10) nach Anspruch 10 oder Anspruch 11, wobei:
die Sensorvorrichtung (14) zum Erfassen eines an die mobile landwirtschaftliche Arbeitsmaschine (10) angrenzenden Bereichs der Umgebung, vorzugsweise vor, neben und/oder hinter der mobilen landwirtschaftlichen Arbeitsmaschine (10), angeordnet ist; und/oder
die Sensorvorrichtung (14) zum Erfassen eines Bereichs der Umgebung entlang einer gesamten Arbeitsbreite der mobilen landwirtschaftlichen Arbeitsmaschine (10), vorzugsweise entlang einer gesamten Arbeitsbreite eines Arbeitsgeräts (12), zum Beispiel eines Verteilgestänges, der mobilen landwirtschaftlichen Arbeitsmaschine (10), angeordnet ist.

13. Verfahren zum Betreiben einer mobilen landwirtschaftlichen Arbeitsmaschine (10), aufweisend:
Vorgeben von Umgebungsinformationen, die einer zum Befahren zugelassenen landwirtschaftlichen Nutzfläche (A), nämlich einer Ackerfläche, zugeordnet sind;
Erfassen einer Umgebung der mobilen landwirtschaftlichen Arbeitsmaschine (10), vorzugsweise eines Bodenbereichs der Umgebung; und
Auswerten der erfassten Umgebung unter Berücksichtigung der vorgegebenen Umgebungsinformationen zum Erkennen der zum Befahren zugelassenen landwirtschaftlichen Nutzfläche (A) und eines zum Befahren nicht zugelassenen Bereichs (N) der Umgebung,
**dadurch gekennzeichnet, dass** das Vorgeben von Umgebungsinformationen direkt in der Umgebung erfolgt, nämlich vor einer Boden- und/oder Pflanzenbehandlung durch die mobile landwirtschaftliche Arbeitsmaschine (10) und unter Verwendung einer Sensorvorrichtung (14) der mobilen landwirtschaftlichen Arbeitsmaschine (10), wobei die Sensorvorrichtung (14) die Umgebung erfasst, wobei mittels einer Benutzerschnittstelle vorgegeben wird, dass von der Sensorvorrichtung erfasste Umgebungsinformationen, nämlich Strukturinformationen und/oder Farbinformationen, als die vorgegebenen Umgebungsinformationen abgespeichert werden, wobei bei Ankunft der Arbeitsmaschine auf der Ackerfläche zunächst ein Farbspektrum oder eine Struktur der Ackerfläche erfasst und so die zum Befahren zugelassene landwirtschaftliche Nutzfläche festgelegt wird.

14. Verfahren nach Anspruch 13, wobei:
die vorgegebenen Umgebungsinformationen vorgegebene Farbinformationen und/oder vorgegebene Strukturinformationen aufweisen, die der zum Befahren zugelassenen landwirtschaftlichen Nutzfläche zugeordnet sind; und/oder
das Auswerten ein Vergleichen mit den vorgegebenen Umgebungsinformationen aufweist, wobei vorzugsweise:
in der erfassten Umgebung eine Fläche gesucht wird, deren Umgebungsinformationen mit den vorgegebenen Umgebungsinformationen übereinstimmen, sodass eine Ausdehnung dieser Fläche als eine Ausdehnung der zum Befahren zugelassenen landwirtschaftlichen Nutzfläche (A) erkannt wird; und/oder
in der erfassten Umgebung eine Fläche gesucht wird, deren Umgebungsinformationen nicht mit den vorgegebenen Umgebungsinformationen übereinstimmen, sodass eine Ausdehnung dieser Fläche als eine Ausdehnung des zum Befahren nicht zugelassenen Bereichs (N) erkannt wird.

15. Verfahren nach einem der Ansprüche 13 oder 14, wobei:
das Vorgeben von Umgebungsinformationen direkt in der Umgebung erfolgt, nämlich:
unter Verwendung einer Sensorvorrichtung (14) der mobilen landwirtschaftlichen Arbeitsmaschine (10), wobei die Sensorvorrichtung (14) die Umgebung, nämlich einen Bodenbereich der Umgebung, erfasst.

## Claims

1. Safety system for a mobile agricultural work machine (10), comprising:
a sensor device (14) which is configured to detect an environment, preferably a ground area of the environment; and
an evaluation device (16) which:
- is configured to evaluate the detected environment taking into account specified environment information which is associated with an agricultural usable area permitted for driving, namely an arable area; and
- is configured, based on the evaluation, to recognise the agricultural usable area permitted for driving and an area (N) not permitted for driving in the detected environment;
**characterised by**
a user interface (18) for the mobile agricultural work machine (10), wherein it can be specified by means of the user interface (18) that environment information detected by the sensor device (14), namely structural information and/or colour information, is stored as the specified environment information, wherein, upon arrival of the work machine on the arable area, a colour spectrum or a structure of the arable area is first detected and the agricultural usable area permitted for driving is thereby defined.

2. Safety system according to claim 1, wherein the evaluation device is further configured to:
find, in the detected environment, an area whose environment information matches the specified environment information, such that an extent of this area is recognised as an extent of the agricultural usable area (A) permitted for driving; and/or
find, in the detected environment, an area whose environment information does not match the specified environment information, such that an extent of this area is recognised as an extent of the area (N) not permitted for driving.

3. Safety system according to claim 1 or claim 2, wherein:
the specified environment information comprises specified colour information which is associated with the agricultural usable area permitted for driving,
wherein preferably:
the specified colour information comprises a threshold value and/or a section of a colour spectrum; and/or
the specified colour information relates to a colouring of the agricultural usable area permitted for driving.

4. Safety system according to claim 3, wherein:
the specified colour information comprises a lower threshold value of a colour spectrum, below which an area (N) of the environment not permitted for driving is recognised and/or above which the agricultural usable area (A) permitted for driving is recognised; and/or
the specified colour information for the area (A) permitted for driving comprises a section of a colour spectrum in which the agricultural usable area (A) permitted for driving is recognised and/or outside which an area (N) of the environment not permitted for driving is recognised; and/or
the specified colour information for the area (A) permitted for driving comprises an upper threshold value of a colour spectrum, above which an area (N) not permitted for driving is recognised and/or below which the agricultural usable area (A) permitted for driving is recognised.

5. Safety system according to any one of the preceding claims, wherein:
the specified environment information comprises specified structural information which is associated with the agricultural usable area permitted for driving,
wherein preferably:
the specified structural information relates to a pattern and/or an irregular structure of the agricultural usable area permitted for driving.

6. Safety system according to claim 5, wherein:
the specified structural information relates to an arrangement, in particular a row spacing, of rows of a row crop of the agricultural usable area (A) permitted for driving; and/or
the specified structural information relates to an arrangement of ridges of the agricultural usable area (A) permitted for driving; and/or
the specified structural information relates to a relief of the agricultural usable area (A) permitted for driving.

7. Safety system according to any one of the preceding claims,
wherein the specified environment information can be input by means of the user interface (18).

8. Safety system according to any one of the preceding claims, wherein the sensor device (14) comprises at least one of:
a camera device, preferably a colour camera device, a light sensor, a colour sensor, a CMOS sensor, a CCD sensor, a spectrometer, a radar device, preferably a ground radar device, and/or a laser scanner device.

9. Safety system according to any one of the preceding claims, wherein the evaluation device (16) is further configured to
evaluate the detected environment for recognising a person, an object and/or an animal in the environment, preferably by comparison with correspondingly specified information; and/or
evaluate the detected environment for recognising a health condition and/or a growth condition of a plant stand of the environment, preferably by comparison with correspondingly specified information.

10. Mobile agricultural work machine (10), which is preferably manually drivable and/or autonomously operable, wherein the work machine (10) comprises:
a safety device according to any one of the preceding claims; and
a control unit (20) which is configured to adapt an operation of the mobile agricultural work machine (10) depending on the evaluation by the evaluation device (16).

11. Mobile agricultural work machine (10) according to claim 10, wherein the control unit (20) is configured to:
output a warning indication; and/or
decelerate, stop, redirect, shut down, transfer into a safe state, transfer into a manual operating mode and/or stop a treatment by the mobile agricultural work machine (10), preferably automatically,
if:
- the mobile agricultural work machine (10) enters the area (N) of the environment not permitted for driving and/or approaches said area; and/or
- the mobile agricultural work machine (10) travels and/or is operated in the area (N) of the environment not permitted for driving; and/or
- the mobile agricultural work machine (10) leaves the agricultural usable area (A) permitted for driving.

12. Mobile agricultural work machine (10) according to claim 10 or claim 11, wherein:
the sensor device (14) is arranged to detect an area of the environment adjoining the mobile agricultural work machine (10), preferably in front of, beside and/or behind the mobile agricultural work machine (10); and/or
the sensor device (14) is arranged to detect an area of the environment along an entire working width of the mobile agricultural work machine (10), preferably along an entire working width of a working implement (12), for example a distribution boom, of the mobile agricultural work machine (10).

13. Method for operating a mobile agricultural work machine (10), comprising:
specifying environment information which is associated with an agricultural usable area (A) permitted for driving, namely an arable area;
detecting an environment of the mobile agricultural work machine (10), preferably a ground area of the environment; and
evaluating the detected environment taking into account the specified environment information for recognising the agricultural usable area (A) permitted for driving and an area (N) of the environment not permitted for driving,
**characterised in that** the specifying of environment information is carried out directly in the environment, namely prior to a soil and/or plant treatment by the mobile agricultural work machine (10) and using a sensor device (14) of the mobile agricultural work machine (10), wherein the sensor device (14) detects the environment, wherein it is specified by means of a user interface that environment information detected by the sensor device, namely structural information and/or colour information, is stored as the specified environment information, wherein, upon arrival of the work machine on the arable area, a colour spectrum or a structure of the arable area is first detected and the agricultural usable area permitted for driving is thereby defined.

14. Method according to claim 13, wherein:
the specified environment information comprises specified colour information and/or specified structural information which is associated with the agricultural usable area permitted for driving; and/or
the evaluating comprises comparing with the specified environment information, wherein preferably:
an area whose environment information matches the specified environment information is searched for in the detected environment, such that an extent of this area is recognised as an extent of the agricultural usable area (A) permitted for driving; and/or
an area whose environment information does not match the specified environment information is searched for in the detected environment, such that an extent of this area is recognised as an extent of the area (N) not permitted for driving.

15. Method according to any one of claims 13 or 14, wherein:
the specifying of environment information is carried out directly in the environment, namely:
using a sensor device (14) of the mobile agricultural work machine (10), wherein the sensor device (14) detects the environment, namely a ground area of the environment.

## Revendications

1. Système de sécurité pour une machine de travail agricole mobile (10), comprenant :
un dispositif de capteur (14), conçu pour détecter un environnement, de préférence une zone de sol de l'environnement ; et
un appareil d'évaluation (16), qui :
- est conçu pour évaluer l'environnement détecté en tenant compte d'informations prédéfinies sur l'environnement, qui sont associées à une surface agricole utile autorisée à la circulation, à savoir une surface arable ; et
- est conçu pour reconnaître, sur la base de l'évaluation, la surface agricole utile autorisée à la circulation et une zone (N) non autorisée à la circulation dans l'environnement détecté ;
**caractérisé par**
une interface utilisateur (18) pour la machine de travail agricole mobile (10), dans lequel il est possible de spécifier, au moyen de l'interface utilisateur (18), que des informations sur l'environnement détectées par le dispositif de capteur (14), à savoir des informations de structure et/ou des informations de couleur, sont enregistrées en tant qu'informations prédéfinies sur l'environnement, dans lequel, à l'arrivée de la machine de travail sur la surface arable, un spectre de couleurs ou une structure de la surface arable est d'abord détecté et la surface agricole utile autorisée à la circulation est ainsi définie.

2. Système de sécurité selon la revendication 1, dans lequel l'appareil d'évaluation est en outre conçu pour :
trouver, dans l'environnement détecté, une surface dont les informations sur l'environnement concordent avec les informations prédéfinies sur l'environnement, de sorte qu'une étendue de cette surface est reconnue comme une étendue de la surface agricole utile (A) autorisée à la circulation ; et/ou
trouver, dans l'environnement détecté, une surface dont les informations sur l'environnement ne concordent pas avec les informations prédéfinies sur l'environnement, de sorte qu'une étendue de cette surface est reconnue comme une étendue de la zone (N) non autorisée à la circulation.

3. Système de sécurité selon la revendication 1 ou la revendication 2, dans lequel :
les informations prédéfinies sur l'environnement comprennent des informations de couleur prédéfinies qui sont associées à la surface agricole utile autorisée à la circulation,
dans lequel, de préférence :
les informations de couleur prédéfinies comprennent une valeur limite et/ou une section d'un spectre de couleurs ; et/ou
les informations de couleur prédéfinies se rapportent à une coloration de la surface agricole utile autorisée à la circulation.

4. Système de sécurité selon la revendication 3, dans lequel :
les informations de couleur prédéfinies comprennent une valeur limite inférieure d'un spectre de couleurs, en dessous de laquelle une zone (N) de l'environnement non autorisée à la circulation est reconnue et/ou au-dessus de laquelle la surface agricole utile (A) autorisée à la circulation est reconnue ; et/ou
les informations de couleur prédéfinies pour la zone (A) autorisée à la circulation comprennent une section d'un spectre de couleurs dans laquelle la surface agricole utile (A) autorisée à la circulation est reconnue et/ou en dehors de laquelle une zone (N) de l'environnement non autorisée à la circulation est reconnue ; et/ou
les informations de couleur prédéfinies pour la zone (A) autorisée à la circulation comprennent une valeur limite supérieure d'un spectre de couleurs, au-dessus de laquelle une zone (N) non autorisée à la circulation est reconnue et/ou en dessous de laquelle la surface agricole utile (A) autorisée à la circulation est reconnue.

5. Système de sécurité selon l'une des revendications précédentes, dans lequel :
les informations prédéfinies sur l'environnement comprennent des informations de structure prédéfinies qui sont associées à la surface agricole utile autorisée à la circulation,
dans lequel, de préférence :
les informations de structure prédéfinies se rapportent à un motif et/ou à une structure irrégulière de la surface agricole utile autorisée à la circulation.

6. Système de sécurité selon la revendication 5, dans lequel :
les informations de structure prédéfinies se rapportent à une disposition, en particulier à un espacement entre rangs, de rangs d'une culture en rangs de la surface agricole utile (A) autorisée à la circulation ; et/ou les informations de structure prédéfinies se rapportent à une disposition de billons de la surface agricole utile (A) autorisée à la circulation ; et/ou
les informations de structure prédéfinies se rapportent à un relief de la surface agricole utile (A) autorisée à la circulation.

7. Système de sécurité selon l'une des revendications précédentes,
dans lequel les informations prédéfinies sur l'environnement peuvent être saisies au moyen de l'interface utilisateur (18).

8. Système de sécurité selon l'une des revendications précédentes, dans lequel le dispositif de capteur (14) comprend au moins l'un des éléments suivants :
un dispositif de caméra, de préférence un dispositif de caméra couleur, un capteur de lumière, un capteur de couleur, un capteur CMOS, un capteur CCD, un spectromètre, un dispositif radar, de préférence un dispositif radar de sol, et/ou un dispositif de scanner laser.

9. Système de sécurité selon l'une des revendications précédentes, dans lequel l'appareil d'évaluation (16) est en outre conçu pour
évaluer l'environnement détecté afin de reconnaître une personne, un objet et/ou un animal dans l'environnement, de préférence par comparaison avec des informations prédéfinies correspondantes ; et/ou
évaluer l'environnement détecté afin de reconnaître un état de santé et/ou un état de croissance d'un peuplement végétal de l'environnement, de préférence par comparaison avec des informations prédéfinies correspondantes.

10. Machine de travail agricole mobile (10), qui peut de préférence être conduite manuellement et/ou fonctionner de manière autonome, dans laquelle la machine de travail (10) comprend :
un dispositif de sécurité selon l'une des revendications précédentes ; et
une unité de commande (20), conçue pour adapter un fonctionnement de la machine de travail agricole mobile (10) en fonction de l'évaluation effectuée par l'appareil d'évaluation (16).

11. Machine de travail agricole mobile (10) selon la revendication 10, dans laquelle l'unité de commande (20) est conçue pour :
émettre un avertissement ; et/ou
freiner, arrêter, réorienter, mettre à l'arrêt la machine de travail agricole mobile (10), la faire passer dans un état sûr, la faire passer dans un mode de fonctionnement manuel et/ou arrêter un traitement effectué par la machine de travail agricole mobile (10), de préférence automatiquement,
lorsque :
- la machine de travail agricole mobile (10) pénètre dans la zone (N) de l'environnement non autorisée à la circulation et/ou s'en approche ; et/ou
- la machine de travail agricole mobile (10) circule et/ou fonctionne dans la zone (N) de l'environnement non autorisée à la circulation ; et/ou
- la machine de travail agricole mobile (10) quitte la surface agricole utile (A) autorisée à la circulation.

12. Machine de travail agricole mobile (10) selon la revendication 10 ou la revendication 11, dans laquelle :
le dispositif de capteur (14) est disposé pour détecter une zone de l'environnement adjacente à la machine de travail agricole mobile (10), de préférence devant, à côté et/ou derrière la machine de travail agricole mobile (10) ; et/ou
le dispositif de capteur (14) est disposé pour détecter une zone de l'environnement sur toute une largeur de travail de la machine de travail agricole mobile (10), de préférence sur toute une largeur de travail d'un outil de travail (12), par exemple d'une rampe de distribution, de la machine de travail agricole mobile (10).

13. Procédé de fonctionnement d'une machine de travail agricole mobile (10), comprenant :
la prédéfinition d'informations sur l'environnement qui sont associées à une surface agricole utile (A) autorisée à la circulation, à savoir une surface arable ;
la détection d'un environnement de la machine de travail agricole mobile (10), de préférence d'une zone de sol de l'environnement ; et
l'évaluation de l'environnement détecté en tenant compte des informations prédéfinies sur l'environnement afin de reconnaître la surface agricole utile (A) autorisée à la circulation et une zone (N) de l'environnement non autorisée à la circulation,
**caractérisé en ce que** la prédéfinition d'informations sur l'environnement est effectuée directement dans l'environnement, à savoir avant un traitement du sol et/ou des plantes par la machine de travail agricole mobile (10) et à l'aide d'un dispositif de capteur (14) de la machine de travail agricole mobile (10), dans lequel le dispositif de capteur (14) détecte l'environnement, dans lequel il est spécifié, au moyen d'une interface utilisateur, que des informations sur l'environnement détectées par le dispositif de capteur, à savoir des informations de structure et/ou des informations de couleur, sont enregistrées en tant qu'informations prédéfinies sur l'environnement, dans lequel, à l'arrivée de la machine de travail sur la surface arable, un spectre de couleurs ou une structure de la surface arable est d'abord détecté et la surface agricole utile autorisée à la circulation est ainsi définie.

14. Procédé selon la revendication 13, dans lequel :
les informations prédéfinies sur l'environnement comprennent des informations de couleur prédéfinies et/ou des informations de structure prédéfinies qui sont associées à la surface agricole utile autorisée à la circulation ; et/ou
l'évaluation comprend une comparaison avec les informations prédéfinies sur l'environnement, dans lequel, de préférence :
une surface dont les informations sur l'environnement concordent avec les informations prédéfinies sur l'environnement est recherchée dans l'environnement détecté, de sorte qu'une étendue de cette surface est reconnue comme une étendue de la surface agricole utile (A) autorisée à la circulation ; et/ou
une surface dont les informations sur l'environnement ne concordent pas avec les informations prédéfinies sur l'environnement est recherchée dans l'environnement détecté, de sorte qu'une étendue de cette surface est reconnue comme une étendue de la zone (N) non autorisée à la circulation.

15. Procédé selon l'une des revendications 13 ou 14, dans lequel :
la prédéfinition d'informations sur l'environnement est effectuée directement dans l'environnement, à savoir :
à l'aide d'un dispositif de capteur (14) de la machine de travail agricole mobile (10), dans lequel le dispositif de capteur (14) détecte l'environnement, à savoir une zone de sol de l'environnement.
